# EUROPEAN PATENT APPLICATION

(11) **EP 2 884 688 A1**
(43) Date of publication of application: **17.06.2015**
(21) Application number: 14191581.9
(22) Date of filing: 04.11.2014
(51) Int. Cl.: H04L 5/00, H04W 36/28, H04W 76/02, H04W 24/04, H04W 76/06, H04W 76/04

(54) **Method of handling radio link failure**

(30) Priority: 08.11.2013 US 201361901449 P; 03.11.2014 US 201414530841
(71) Applicant: Industrial Technology Research Institute, Chutung, Hsinchu 310 (TW)
(72) Inventor: Chen, Hung-Chen, 221 New Taipei City (TW)
(74) Representative: Straus, Alexander

(57) **Abstract**

A method of handling radio link failure (RLF) by a communication device in a wireless communication system is disclosed. The method comprises connecting to at least two base stations including a first base station and a second base station in the wireless communication system, detecting RLF on the first base station, and sending a RLF cause report associated to the first base station to the second base station.

## Description

### Field of the Invention

The present invention relates to a method used by a communication device in a wireless communication system, and more particularly, to a method of handling radio link failure in dual connectivity.

### Background of the Invention

3GPP in Release 12 proposes dual connectivity for increasing user's throughput. Dual connectivity to at least two cells may be served by different evolved NodeBs (eNBs), connected with non-ideal backhaul, and an eNB may be in charge of a cluster of cells. Therefore, a user equipment (UE) may be served by multiple eNBs when it is in dual connectivity mode.

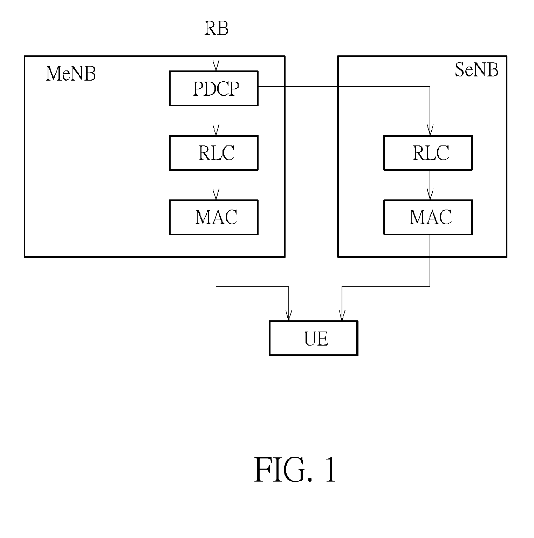

Under framework of the dual connectivity, traffic streams may be served by one eNB, or split over more than one eNBs, depending on QoS requirements of each traffic type, loading situation, channel condition, and the combination thereof. A radio bearer whose radio protocols are only located in a master eNB (hereafter called MeNB), and thus can use MeNB resources only, is defined as MeNB specific bearer. For MeNB specific bearer, the MeNB is U-plane connected to the S-GW via S1-U. A radio bearer whose radio protocols are only located in a secondary eNB (hereafter called SeNB), and thus can use SeNB resources only, is defined as SeNB specific bearer. For SeNB specific bearer, the SeNB is directly connected with the S-GW via S1-U. A radio bearer whose radio protocols are located in both MeNB and SeNB, and thus can use radio resources provided by both the MeNB and the SeNB, is defined as a split (radio) bearer. For split bearers, the MeNB is U-plane connected to the S-GW via S1-U. In detail, Fig. 1 shows a radio bearer split between the MeNB and SeNB. Fig. 1 illustrates user plane protocol stack in MeNB and SeNB. In Fig. 1, user plane data of a radio bearer RB is transmitted to the MeNB, and then a shared packet data convergence protocol (PDCP) entity of the MeNB routes PDCP PDUs for the user plane data to a radio link control (RLC) entity of the MeNB and a RLC entity of the SeNB for transmission to a UE. As can be seen, with split radio bearer, the UE can receive user plane data of a radio bearer via both MeNB and SeNB, to enhance user throughput. On the other hand, the UE can transmit user plane data of a radio bearer via both MeNB and SeNB.

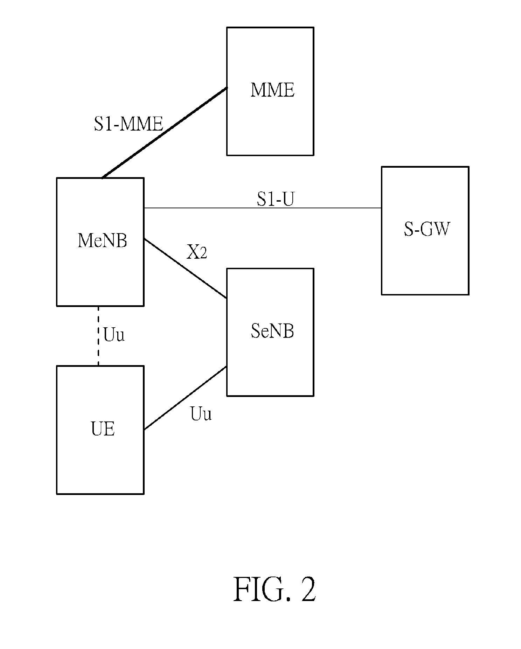

Fig. 2 illustrates user plane architecture for dual connectivity in case of split radio bearer. As shown in Fig. 2, the MeNB is connected to a serving gateway (S-GW) via S1-U, to the SeNB via X2, to the UE via Uu and to a mobility management entity (MME) via S1-MME. The MeNB in dual connectivity terminates the S1-MME interface and therefore acts as mobility anchor towards a core network (CN). The X2 interface between the MeNB and SeNB involved in dual connectivity provides transmission of PDCP PDUs for user plane data of a split radio bearer. In detail, user plane data is sent from the S-GW to the MeNB via S1-U, and the MeNB splits the user plane data to SeNB via X2. Thus, MeNB and SeNB can simultaneously transmit user plane data of a split radio bearer to the UE via Uu. Similarly, the UE can simultaneously transmit user plane data of a split radio bearer to the MeNB and SeNB. The functionality of MME and S-GW should be well known in the art, so they are omitted herein.

A radio link failure (RLF) could happen between a UE and an eNB. The UE may consider RLF to be detected upon T310 expiry, upon random access problem indication from MAC while neither T300, T301, T304 nor T311 is running, or upon indication from RLC that the maximum number of retransmissions has been reached. In a word, the UE considers the RLF to be detected when a physical radio link problem, a RACH procedure failure and the RLC retransmission over retransmission threshold occurs. After the UE detects the RLF, the UE leaves a radio resource control (RRC) connected mode if AS security has not been activated, otherwise initiates a RRC connection re-establishment procedure.

Based on the current specification, if there is a RLF detected on an eNB, the UE performs the RRC connection re-establishment to the eNB. If the re-establishment is failed, the UE would perform the cell (re)selection procedure for RRC connection request, which would cause service interruption, and the interface S1-MME would be re-established afterwards. However, in dual connectivity, there is still available radio link between another eNB and the UE, thus the RRC connection re-establishment, the S1-MME re-establishment and S1 signaling (due to S1-MME re-establishment) may be unnecessary and service interruption could be avoided.

### Summary of the Invention

The application aims at providing a method of handing radio link failure (RLF) in dual connectivity in order to solve the abovementioned problems.

This is achieved by a method of handing radio link failure (RLF) in dual connectivity according to claims 1, 8 and 13. The dependent claims pertain to corresponding further developments and improvements.

As will be seen more clearly from the detailed description following below, the claimed method of handling radio link failure (RLF) by a communication device in a wireless communication system comprises connecting to at least two base stations including a first base station and a second base station in the wireless communication system, detecting RLF on the first base station, and sending a RLF cause report associated to the first base station to the second base station.

### Brief Description of the Drawings

Fig. 1 is a schematic diagram of user plane protocol stack in MeNB and SeNB in case of split radio bearer.
Fig. 2 is a schematic diagram of user plane architecture for dual connectivity in case of split radio bearer.
Fig. 3 is a schematic diagram of a wireless communication system.
Fig. 4 is a schematic diagram of an exemplary communication device.
Figs. 5-7 are flowcharts of an exemplary process according to the present disclosure.
Figs. 8-35 are schematic diagrams of several exemplary embodiments.

### Detailed Description

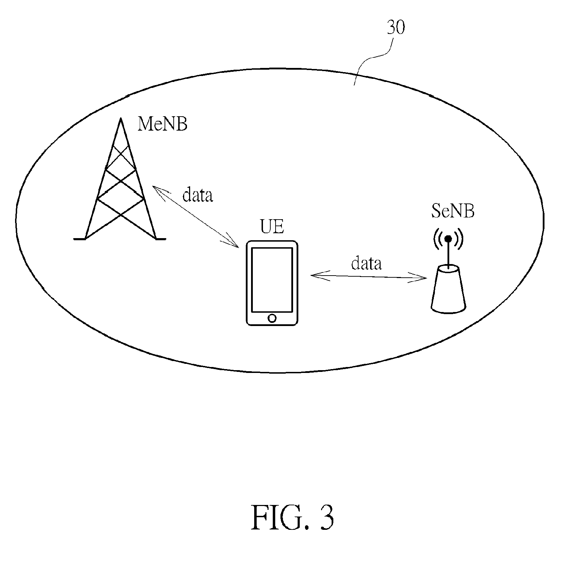

Fig. 3 is a schematic diagram of a wireless communication system 30. The wireless communication system 30 is a LTE/LTE-Advanced system or other mobile communication systems, and is briefly composed of at least two network nodes, i.e. a master eNB (hereafter called MeNB) and a secondary eNB (hereafter called SeNB), and a user equipment (UE). Fig. 3 is simply utilized for illustrating the structure of the wireless communication system 30, where the number of UEs and eNBs are not limited herein. The UEs can be devices such as mobile phones, computer systems, machine type devices, etc. The network node or eNB could be referred to a base station. Besides, the network node and the UE can be seen as a transmitter or receiver according to transmission direction, e.g., for uplink (UL), the UE is the transmitter and the network node is the receiver, and for downlink (DL), the network node is the transmitter and the UE is the receiver.

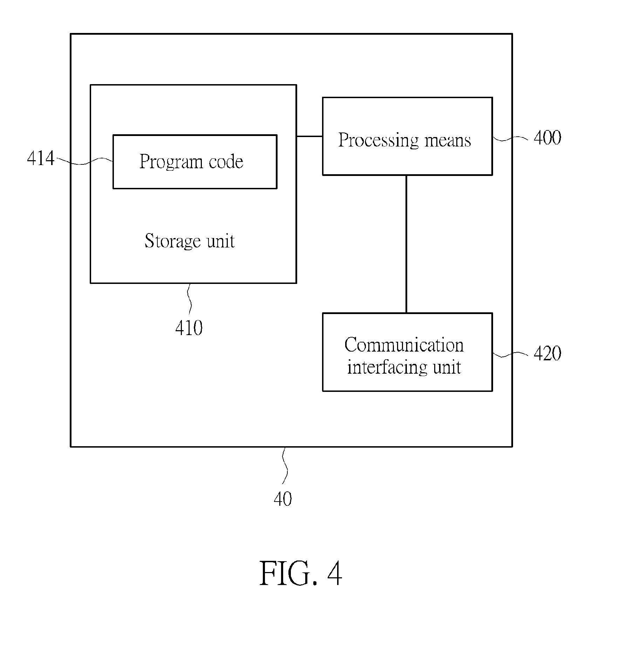

Fig. 4is a schematic diagram of an exemplary communication device 40. The communication device 40 can be the UE, MeNB, or SeNB shown in Fig. 3. The communication device 40 may include a processing means 400 such as a microprocessor or Application Specific Integrated Circuit (ASIC), a storage unit 410 and a communication interfacing unit 420. The storage unit 410 may be any data storage device that can store program code 414, for access by the processing means 400. Examples of the storage unit 410 include, but are not limited to, a subscriber identity module (SIM), read-only memory (ROM), flash memory, random-access memory (RAM), CD-ROMs, magnetic tape, hard disk, and optical data storage device. The communication interfacing unit 420 is preferably a radio transceiver and can exchange wireless signals with a network (i.e. E-UTRAN) according to processing results of the processing means 400.

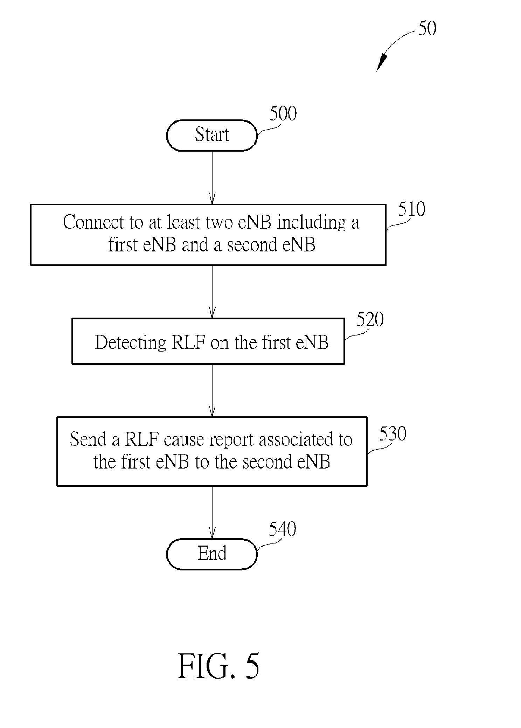

Fig. 5 is a flowchart of a process 50 according to an example of the present disclosure. The process 50 is utilized in the UE of Fig. 3 for handling radio link failure (RLF) in dual connectivity. The process 50 may be compiled into a program code 414 to be stored in the storage unit 410, and may include the following steps:
- Step 500:: Start.
- Step 510:: Connect to at least two eNB including a first eNB and a second eNB.
- Step 520:: Detecting RLF on the first eNB.
- Step 530:: Send a RLF cause report associated to the first eNB to the second eNB.
- Step 540:: End.

According to the process 50, when the UE detects a RLF due to bad signal quality or RACH procedure failure due to network congestion on one of eNBs involved in the dual connectivity, the UE does not immediately perform a radio resource control (RRC) connection re-establishment, but the UE sends a RLF cause report associated to the eNB which has RLF to inform another eNB which has no RLF. In other words, the present invention proposes a new RLF handling process for the UE in dual connectivity, to avoid triggering RRC connection re-establishment which would cause service interruption, if there is still one eNB having available radio link with the UE.

The RLF cause report may include the information as following, but not limited herein:
RLF Cause A: Physical radio link problem;
RLF Cause B: RLC retransmission over maximum retransmission threshold; and
RLF Cause C: RACH procedure is failed.

The UE performs the RRC connection re-establishment procedure only when RLF is detected on all eNBs involved in the dual connectivity, RLF is detected on a MeNB and a SeNB is deactivated after, or RLF is detected on the SeNB and the MeNB releases a RRC connection with the UE after, or a timer triggered by RLF is expired.

In addition, after the UE informs RLF cause report to the eNB having no RLF, the UE may stop data/signal (i.e. sounding reference signal (SRS)) transmission or reception with the eNB having RLF, release configuration (i.e. SRS configuration or CSI configuration) related to the eNB having RLF. Alternatively, the UE may perform measurement for the eNB having RLF, to determining whether to resume the radio link with the eNB having RLF.

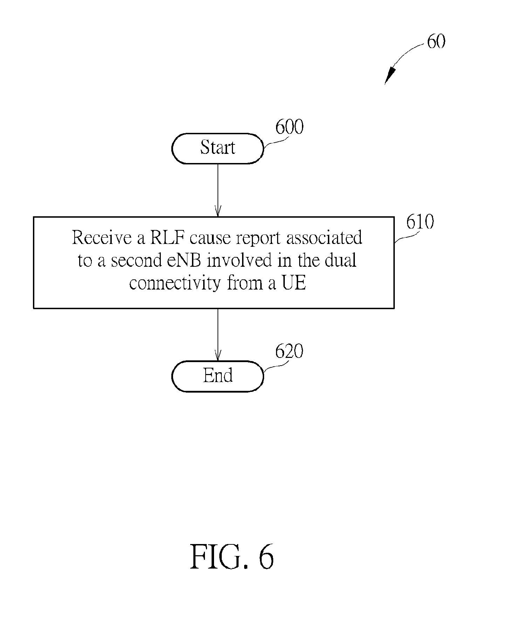

Fig. 6 is a flowchart of a process 60 according to an example of the present disclosure. The process 60 is utilized in a first eNB (i.e. the MeNB or SeNB of Fig. 3) for handling radio link failure (RLF) in dual connectivity. The process 60 may be compiled into a program code 414 to be stored in the storage unit 410, and may include the following steps:
- Step 600:: Start.
- Step 610:: Receive a RLF cause report associated to a second eNB involved in the dual connectivity from a UE.
- Step 620:: End.

According to the process 60, the first eNB having no RLF receives the RLF cause report associated to the second eNB having RLF from the UE. In addition, the first eNB may forward the RLF cause report to the second eNB (i.e. via X2 interface of Fig. 2).

If the second eNB is not the MeNB which establishes S1-MME interface to the MME of Fig. 2, and the first eNB is the MeNB, the first eNB may stop forwarding data via the second eNB. In addition, the first eNB may send a measurement command to the UE for measuring the second eNB and determining whether the RLF cause is disappeared, so as to recover the radio link between the second base station and the UE. Alternatively, the first eNB may switch radio bearers from the second eNB to the first eNB, configure the UE to perform the RRC connection re-establishment, or deactivate the second eNB based on QoS requirements, system load, and/or backhaul latency of the first eNB.

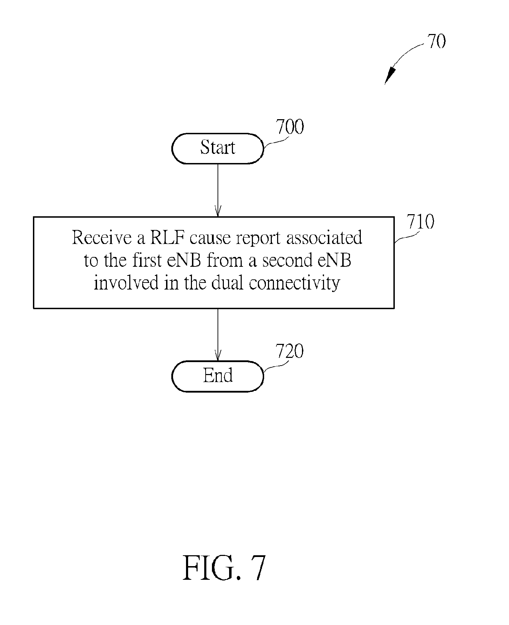

Fig. 7 is a flowchart of a process 70 according to an example of the present disclosure. The process 70 is utilized in a first eNB (i.e. the MeNB or SeNB of Fig. 3) for handling radio link failure (RLF) in dual connectivity. The process 70 may be compiled into a program code 414 to be stored in the storage unit 410, and may include the following steps:
- Step 700:: Start.
- Step 710:: Receive a RLF cause report associated to the first eNB from a second eNB involved in the dual connectivity.
- Step 720:: End.

According to the process 70, the first eNB receives the RLF cause report associated to the first eNB from the second eNB. The first eNB may transmit data via the second eNB if the first eNB is the MeNB. In addition, the first eNB may recover the radio link with the UE, switch S1-U for radio bearers on the first eNB and S1-MME from the first eNB to the second eNB, or configure the UE to perform the RRC connection re-establishment based on QoS requirements, system load, and/or backhaul latency of the first eNB. Alternatively, the first eNB may stop data transmission to the UE if the first eNB is the SeNB.

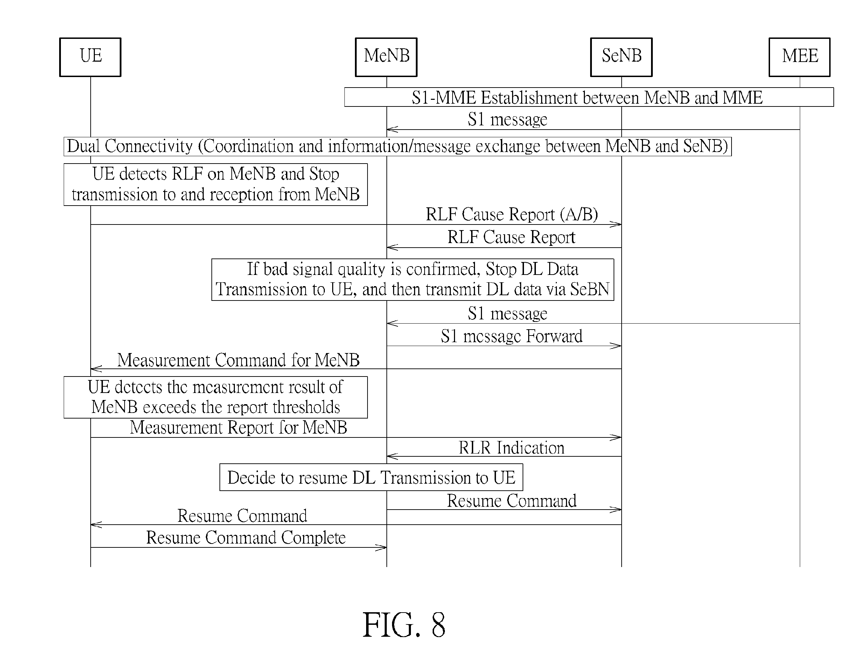

Figs. 8-36 show detailed RLF operation for the UE, MeNB and SeNB in the dual connectivity. Note that, the present invention discloses an optimized method for handing RLF in dual connectivity, and can be applied for an eNB supporting split radio bearer or non-split radio bearer. In addition, there are two control plane options for the MeNB and SeNB. In a first control plane option, only the MeNB generates the final RRC messages to be sent towards the UE after the coordination of radio resource management (RRM) functions between the MeNB and SeNB. The RRC entity of the UE sees all messages coming only from one entity (in the MeNB) and the UE only replies back to that entity. In a second control plane option, the MeNB and SeNB can generate final RRC messages to be sent towards the UE after the coordination of RRM functions between the MeNB and SeNB and may send those directly to the UE and the UE replies accordingly.

In a first embodiment, the MeNB supports split radio bearer. The architecture can be referred back to Figs. 1-2. In the following embodiment, the second control plane option for the MeNB and SeNB is adopted. In detail Fig. 8 illustrates an embodiment of RLF operation in dual connectivity. In Fig. 8, the UE camps on the MeNB. Later, the MeNB adds SeNB for the UE to make the UE in dual connectivity. In dual connectivity, the MeNB and SeNB need to coordinate and exchange information for serving the UE. Once the UE detects RLF on the MeNB, it may stop transmission to and reception from the MeNB and send RLF Cause Report including as abovementioned RLF Cause A or B (i.e. indicating physical radio link problem or RLC retransmission over maximum retransmission threshold) to the SeNB. Then, the SeNB forwards the information of the RLF Cause Report to the MeNB. The MeNB would confirm whether the RLF is caused by bad signal quality. If yes, the data/signal between the MeNB and the UE would be transmitted via SeNB. In addition, the SeNB would send the Measurement Command for the UE to measure the MeNB. In case the UE detects the measurement result of MeNB exceeds the report thresholds, the UE sends the Measurement Report to the SeNB and the SeNB informs the MeNB by the radio link recovery (RLR) message. After receiving the RLR message from the SeNB, if the MeNB decides to resume DL transmission to the UE, the MeNB would send the Resume Command to UE via the SeNB to recover the radio link with the UE.

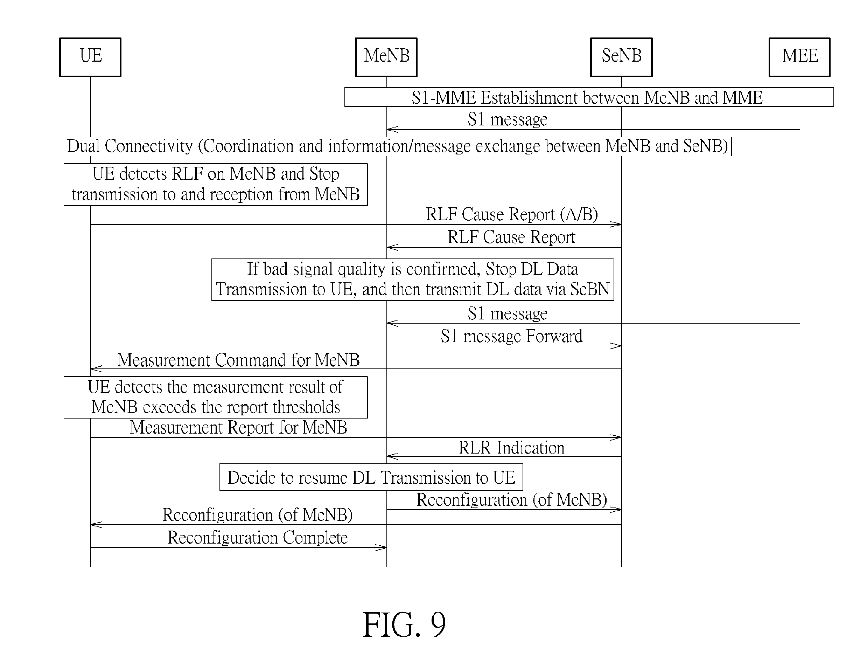

In an embodiment, as shown in Fig. 9, after receiving the RLR message from the SeNB, if the MeNB decides to resume DL transmission to the UE, the MeNB would send the reconfiguration of the MeNB to the UE via the SeNB to recover the radio link between the UE if some configurations on the UE need to be modified or changed.

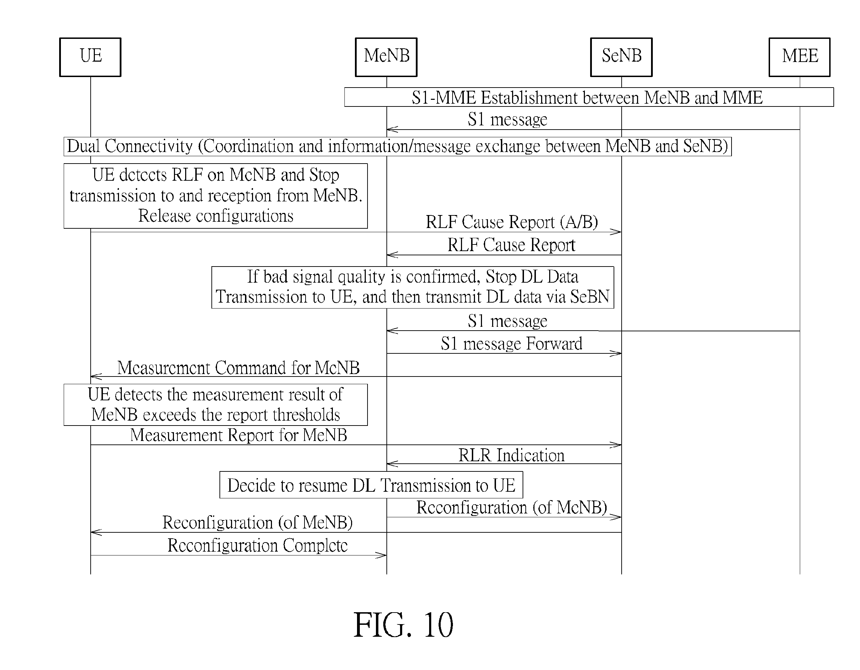

Different to the embodiment of Fig. 9, in an embodiment of Fig. 10, once the UE detects RLF on the MeNB, it may stop transmission to and reception from MeNB, and also release some configurations of the MeNB (e.g., SRS configuration and CSI configuration).

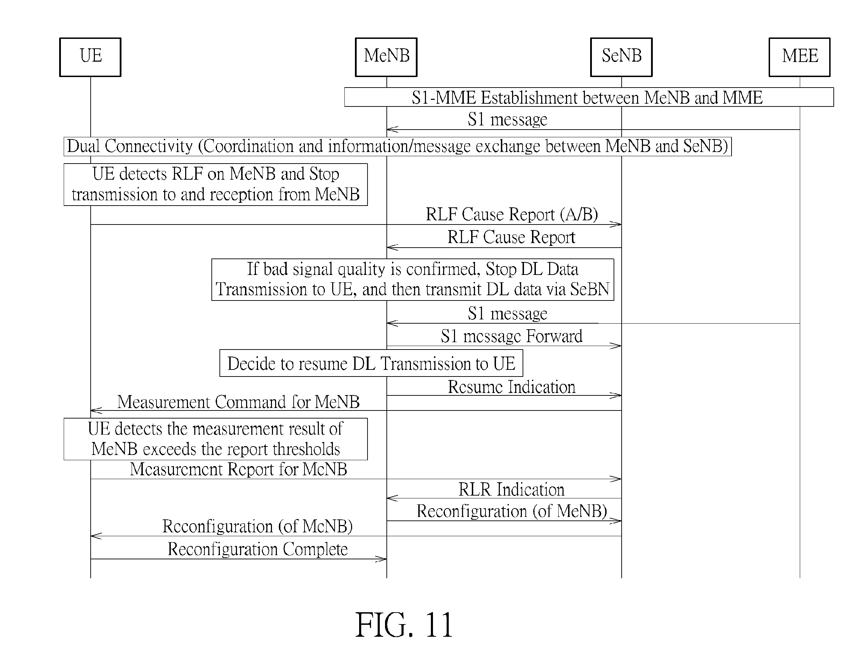

In an embodiment shown in Fig. 11, after the MeNB receives RLF Cause Report from the SeNB, if the MeNB decides to resume DL transmission to the UE, the MeNB would send the Resume Indication to the SeNB first, and then the SeNB sends the Measurement Command to the UE.

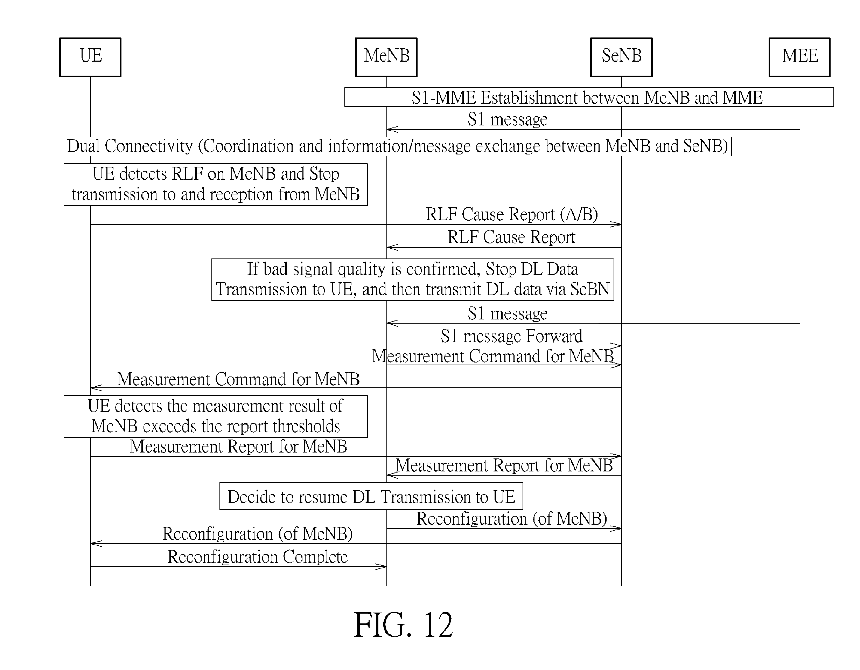

Different to the abovementioned embodiments of Figs. 8-11, the first control plane option of that the MeNB comprehend and generate all the RRC message form/to the UE is adopted. In detail, Fig. 12 shows that once the UE detects RLF on the MeNB, it may stop transmission to the MeNB and send RLF Cause Report to the SeNB and SeNB directly forwards this RLF cause report to the MeNB. Suppose the RLF Cause Report includes RLF Cause A or B, the MeNB would confirm whether the RLF is caused by bad signal quality. If yes, the data and the signal between the MeNB and UE would be transmitted via the SeNB. In addition, the MeNB would send the Measurement Command to the UE via the SeNB for the UE to measure the MeNB itself. In case the UE detects the measurement result of the MeNB exceeds the report thresholds, the UE send the Measurement Report to the SeNB and the SeNB directly forwards this Measurement Report to the MeNB. The following actions in Fig. 12 for the MeNB, SeNB and the UE can be referred from above, so it is omitted herein.

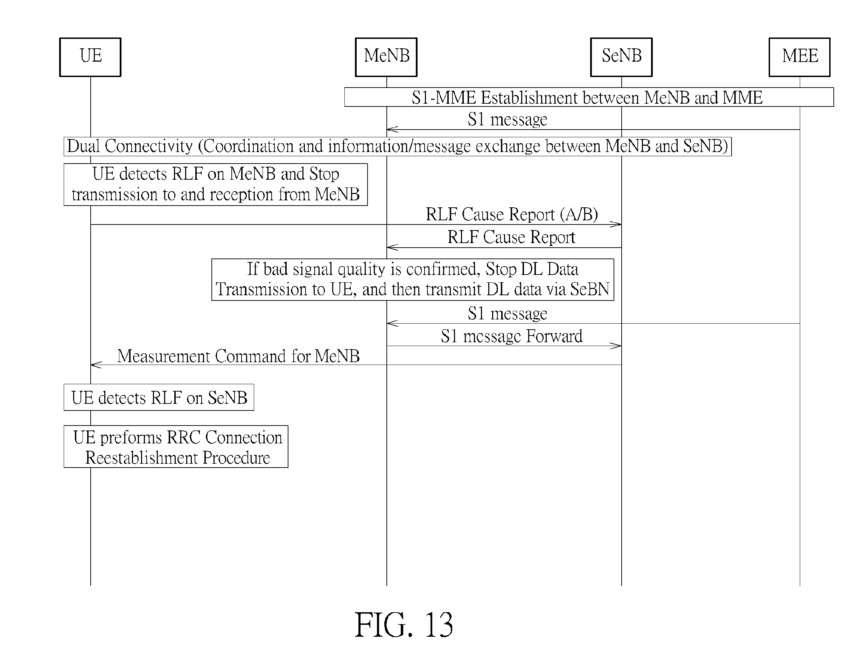

In an embodiment of Fig. 13, after the UE detects RLF on the MeNB, if the UE further detects RLF on the SeNB later (namely the RLF both detected on the MeNB and SeNB), the UE would perform RRC connection re-establishment procedure.

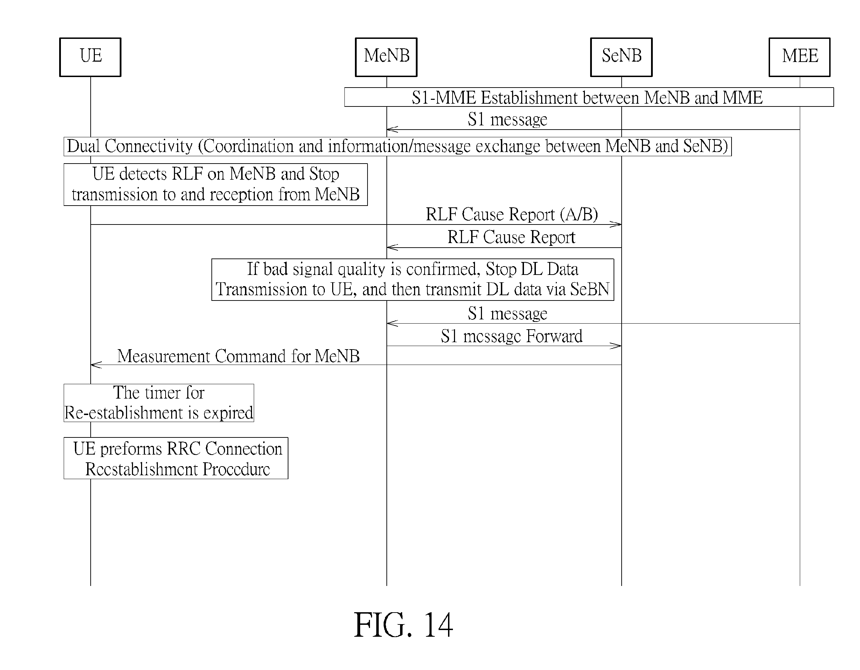

In an embodiment of Fig.14, after sending the RLF cause report, the UE may start a timer for RRC connection re-establishment procedure. If the timer for the RRC connection re-establishment procedure is expired (i.e., time is up), the UE would perform RRC connection re-establishment procedure. The timer could be pre-defined, assigned by the MeNB or SeNB from dedicated message or broadcasting by the MeNB or SeNB.

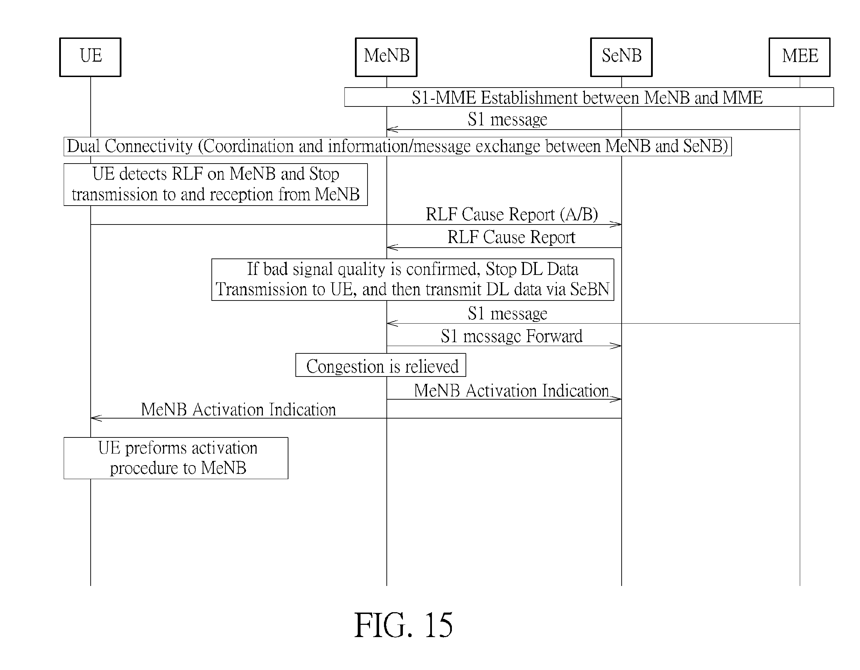

Different to the abovementioned embodiments of Figs. 8-14, in an embodiment of Fig.15, the RLF Cause Report includes RLF Cause C (i.e. indicating RACH procedure is failed). The MeNB would confirm whether the RLF is caused by network congestion. If yes, the data and the signal between the MeNB and UE would be transmitted via the SeNB. Also, if the congestion on the MeNB is relieved, the MeNB would send a MeNB activation indication to the SeNB, and the SeNB would forward this MeNB activation indication to the UE. After receiving the MeNB activation indication, the UE would perform activation procedure to the MeNB.

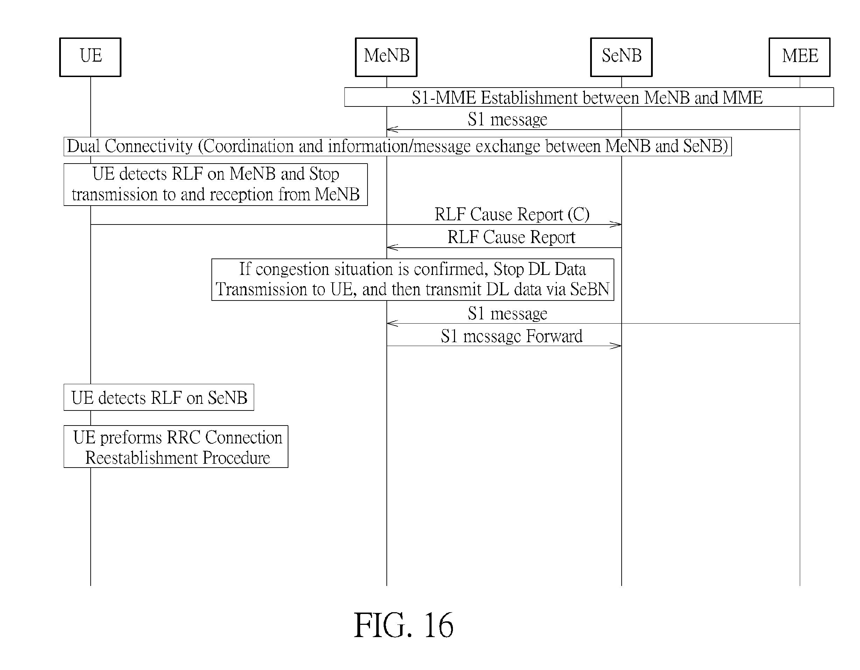

In an embodiment of Fig.16, after the UE sends RLF Cause Report, if the UE further detects RLF on the SeNB later (namely both RLF occurs on the MeNB and the SeNB), the UE would perform RRC connection re-establishment procedure.

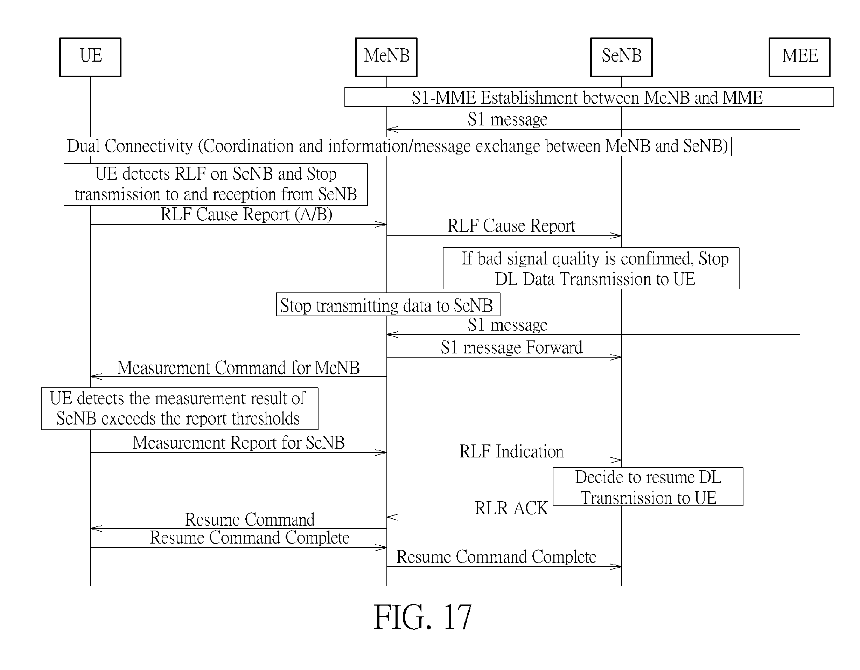

Different to the abovementioned embodiments of Figs. 8-16, the RLF may be detected on the SeNB rather than the MeNB. In detail, Fig. 17 shows that once the UE detects RLF on SeNB, it may stop transmission to and reception from SeNB and send RLF Cause Report including RLF Cause A or B to MeNB. Then, MeNB may forward the information of RLF Cause Report to the SeNB. In addition, the MeNB would stop transmitting the data and the signal via the SeNB to UE. The SeNB would also stop DL data transmission to UE. Also, The MeNB would send the Measurement Command for UE to measure the SeNB. In case the UE detects the measurement result of the SeNB exceeds the report thresholds, the UE sends the Measurement Report to the MeNB and the MeNB informs the SeNB by the RLR indication. If the SeNB decides to resume DL transmission to UE, the SeNB sends RLR ACK to the MeNB. After receiving the RLR ACK from the SeNB, the MeNB would send the Resume Command to the UE to recover the radio link.

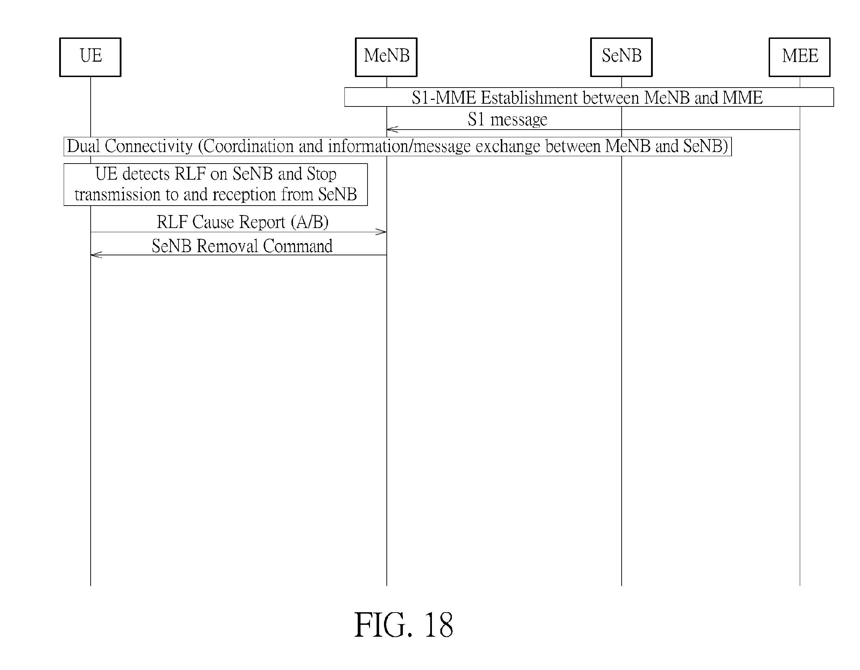

Alternatively, in Fig. 18, once the UE detects RLF on SeNB, it may stop transmission to and reception from the SeNB and send RLF Cause Report to the MeNB. Then, MeNB may send SeNB Removal Command to deactivate the SeNB.

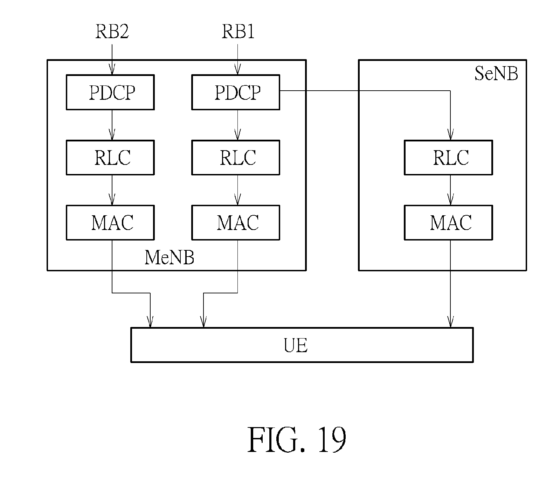

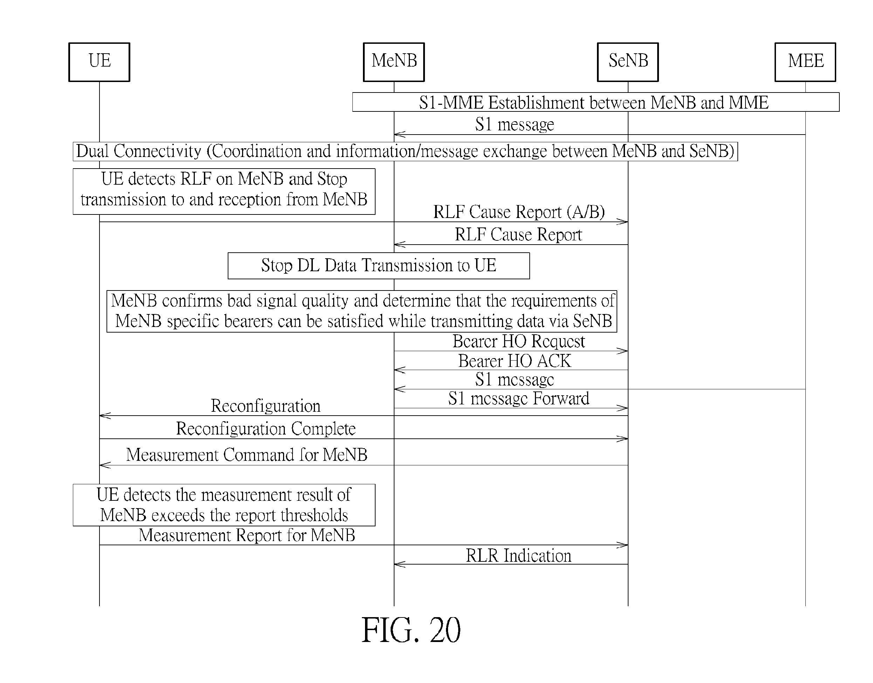

In a second embodiment, the MeNB supports split radio bearer RB1 and MeNB specific bearer RB2 as shown in Fig. 19, and the second control plane option is adopted. In detail, Fig. 20 shows that once the UE detects RLF on the MeNB, it may stop transmission to the MeNB and send RLF Cause Report including RLF Cause A or B to the SeNB. Then, the SeNB forward the information of RLF cause report to the MeNB. Then, the MeNB would confirm whether the RLF is caused by bad signal quality and whether the requirements of MeNB specific bearers can be satisfied while transmitting data via the SeNB. If the requirements of MeNB specific bearers can be satisfied while transmitting data via the SeNB, the MeNB sends the bearer handover request Bearer HO Request to the SeNB. If the SeNB returns bearer handover ACK Bearer HO ACK, the data and the signal between the MeNB and UE would be transmitted via the SeNB. Also, the SeNB would send the Measurement Command for the UE to measure the MeNB. In case the UE detects the measurement result of the MeNB exceeds the report thresholds, the UE would send the Measurement Report to the SeNB and the SeNB informs the MeNB by the RLR message. After receiving the RLR message from the SeNB, if the MeNB decides to resume DL transmission to UE, the MeNB would send the reconfiguration to UE via the SeNB to recover the radio link. In addition, the MeNB may send another bearer handover request Bearer HO Request to the SeNB to switch some radio bearers back to itself.

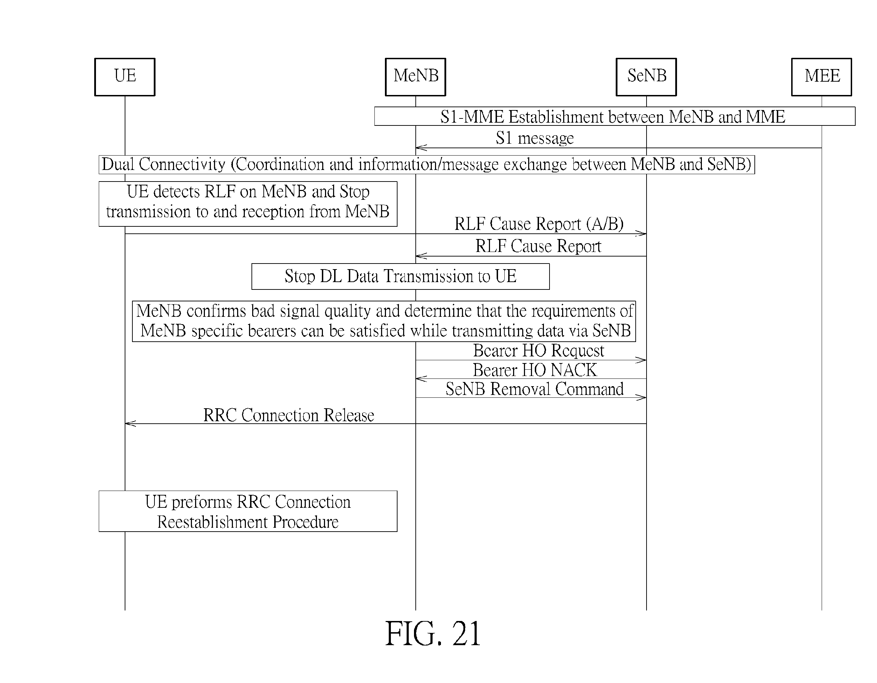

Alternatively, as shown in Fig. 21, the SeNB may return bearer handover NACK Bearer HO NACK even if the requirements of MeNB specific bearers can be satisfied while transmitting data via the SeNB. Then, the MeNB would then send the SeNB Removal Command to the SeNB. After receiving this SeNB removal command, the SeNB would send the RRC Connection Release accordingly. If the UE receives the RRC Connection Release from the SeNB while there is still RLF on the MeNB, the UE would perform RRC connection re-establishment procedure.

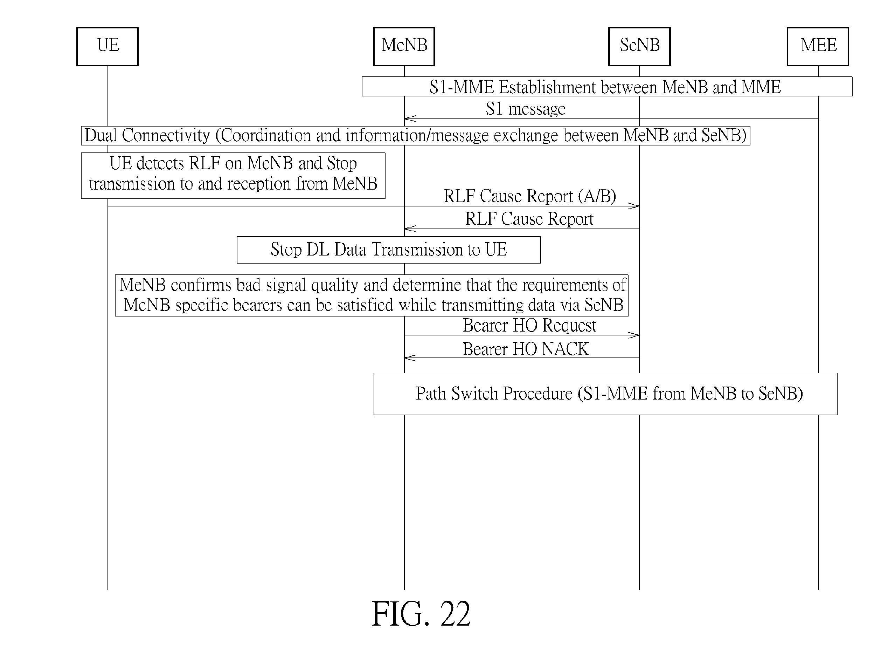

In an embodiment of Fig. 22, if the SeNB returns bearer handover NACK Bearer HO NACK, the MeNB would then perform a path switch procedure to switch S1-MME from the MeNB to the SeNB (i.e. S1-MME between the MeNB and UE would be removed and a new S1-MME between the SeNB and UE would be established).

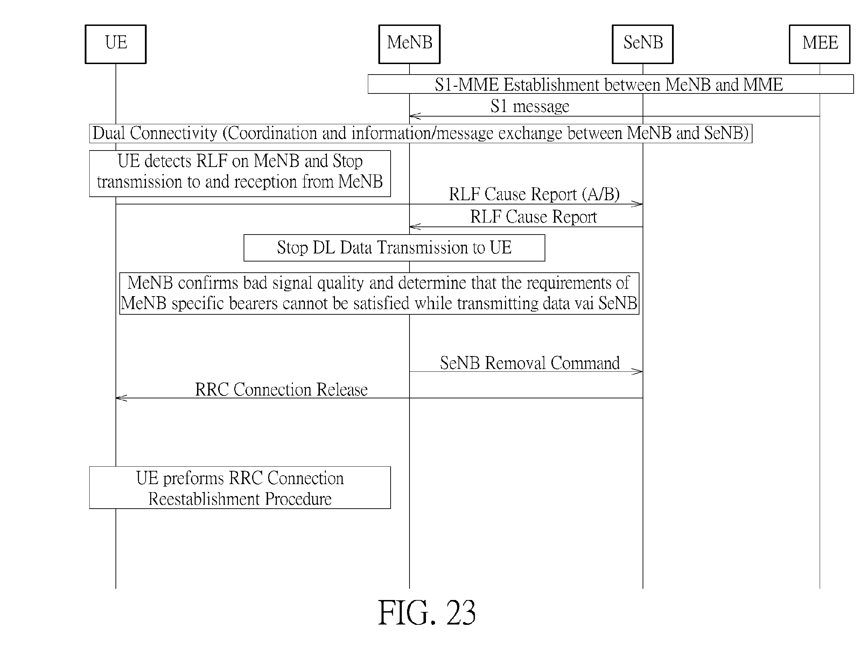

In an embodiment of Fig. 23, if the requirements of the MeNB specific bearers cannot be satisfied while transmitting data via the SeNB, the MeNB would then send the SeNB Removal Command to the SeNB. After receiving the SeNB Removal Command, the SeNB would send the RRC Connection Release accordingly. If the UE receives the RRC connection Release from the SeNB while there is still RLF on the MeNB, the UE would perform RRC connection re-establishment procedure.

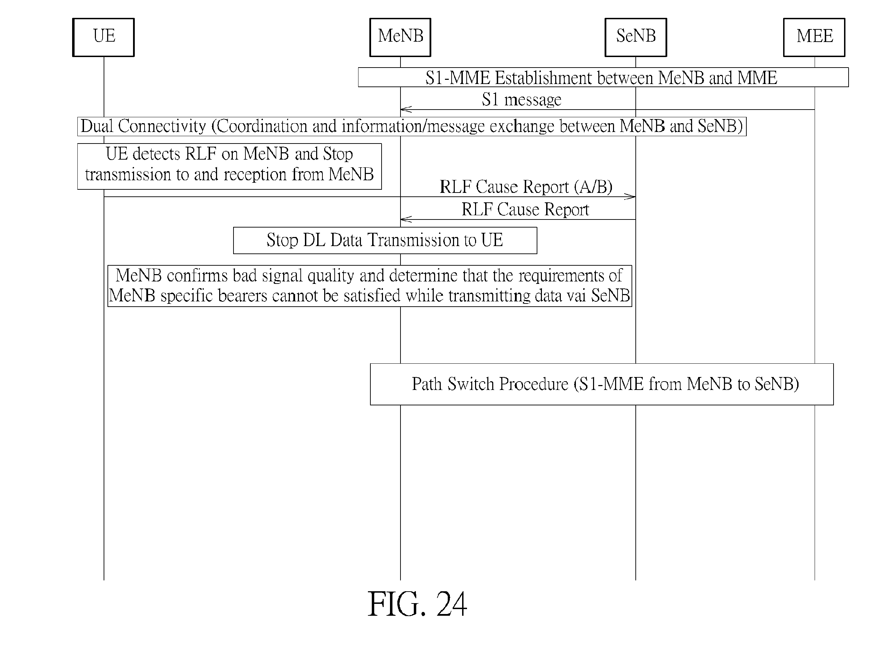

In an embodiment of Fig. 24, if the requirements of MeNB specific bearers cannot be satisfied while transmitting data via the SeNB, the MeNB would then perform the path switch procedure to switch S1-MME from the MeNB to the SeNB (i.e., S1-MME between MeNB and UE would be removed and new S1-MME between the SeNB and UE would be established).

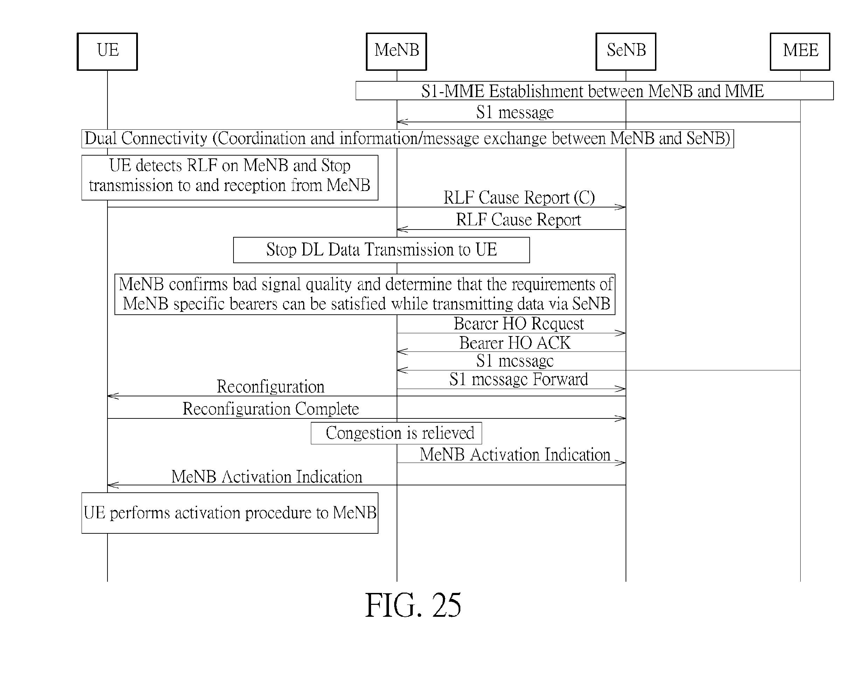

Different to the embodiments of Figs.20-24, in an embodiment of Fig. 25, the RLF Cause Report includes RLF Cause C. The MeNB would confirm whether the RLF is caused by network congestion and whether the requirements of MeNB specific bearers can be satisfied while transmitting data via the SeNB. If the requirements of MeNB specific bearers can be satisfied while transmitting data via the SeNB, the MeNB sends the bearer handover request Bearer HO Request to the SeNB. If the SeNB returns bearer handover ACK Bearer HO ACK, the data and the signal between the MeNB and UE would be transmitted via the SeNB. On the other hand, if the congestion on MeNB is relieved, the MeNB would send a MeNB Activation Indication and the SeNB would forward this MeNB Activation Indication to the UE. After receiving the MeNB Activation Indication, the UE would perform activation procedure to the MeNB.

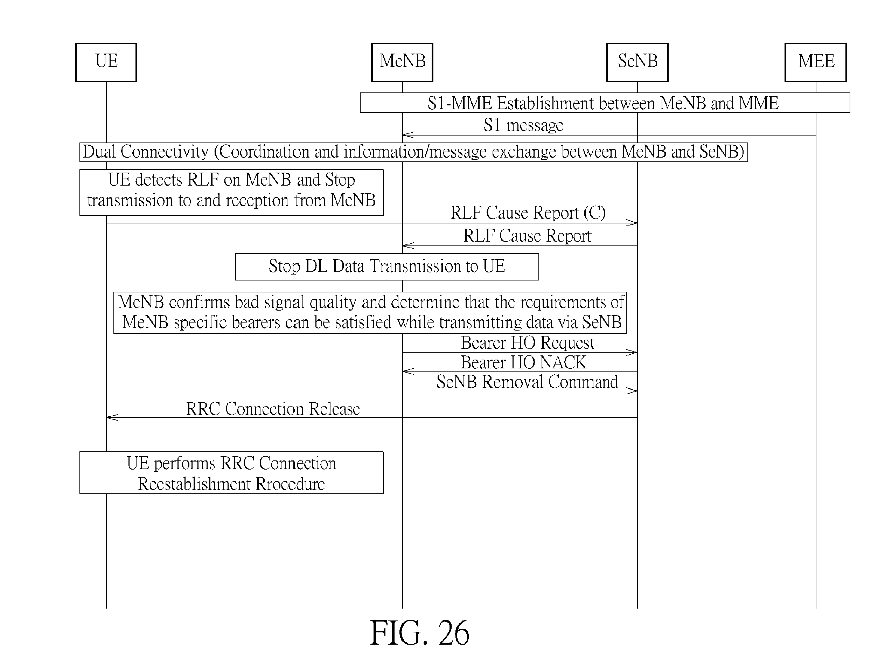

On the other hand, in Fig. 26, if the SeNB returns bearer handover NACK Bearer HO NACK, the MeNB would then send the SeNB Removal Command to the SeNB. After receiving the SeNB Removal Command, the SeNB would send the RRC Connection Release accordingly. If the UE receives the RRC Connection Release from the SeNB while there is still RLF on the MeNB, the UE would perform RRC connection re-establishment procedure.

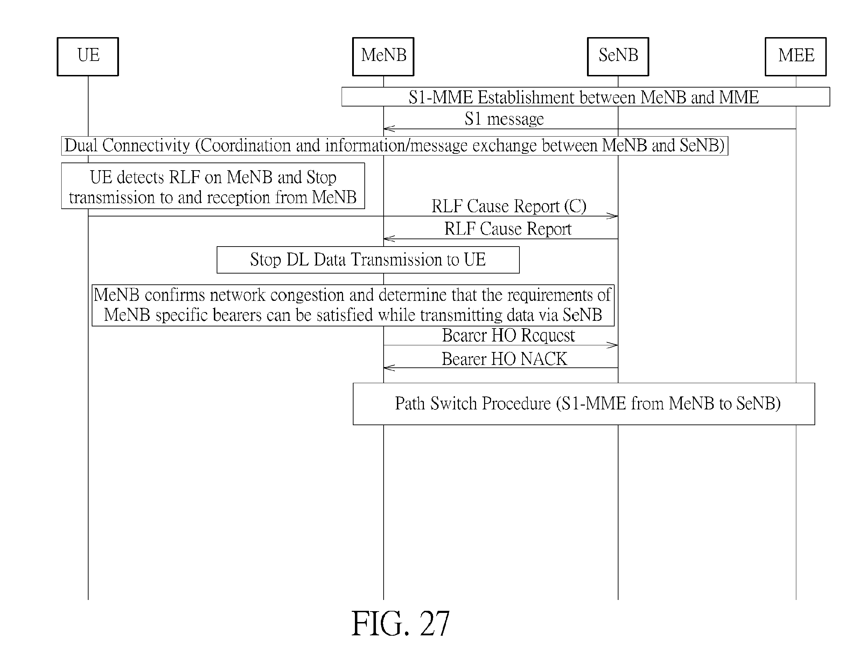

In an embodiment of Fig. 27, the MeNB may confirm whether the requirements of MeNB specific bearers can be satisfied while transmitting data via the SeNB. If the requirements of MeNB specific bearers can be satisfied while transmitting data via the SeNB, the MeNB sends the bearer handover request Bearer HO Request to the SeNB. If SeNB returns bearer handover NACK Bearer HO NACK, the MeNB would then perform the path switch procedure to switch S1-MME from MeNB to SeNB (i.e., S1-MME would be between SeNB and UE).

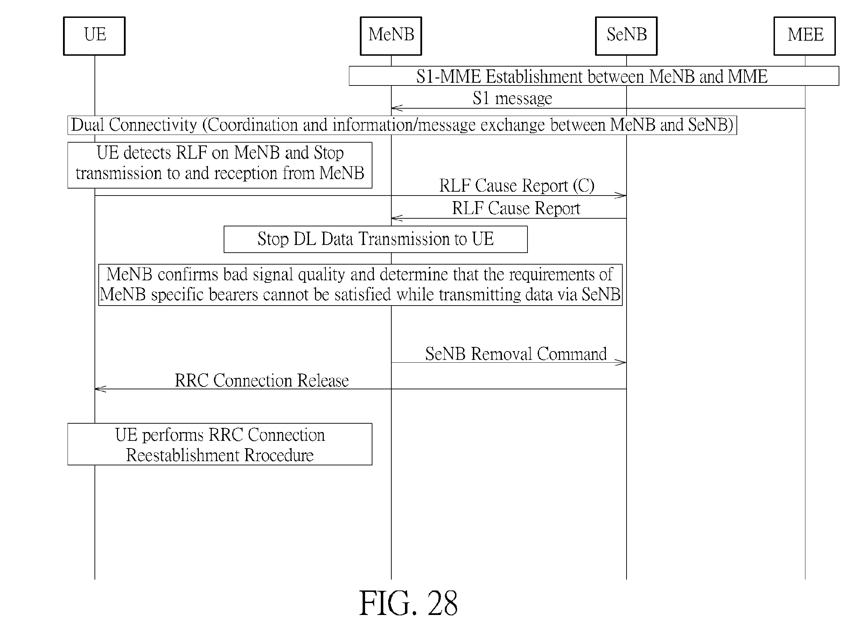

Alternatively, in Fig. 28 if the requirements of MeNB specific bearers cannot be satisfied while transmitting data via the SeNB, the MeNB would then send the SeNB Removal Command to the SeNB. After receiving the SeNB Removal Command, the SeNB would send the RRC Connection Release accordingly. If the UE receives the RRC Connection Release from the SeNB while there is still RLF on the MeNB, the UE would perform RRC connection re-establishment procedure.

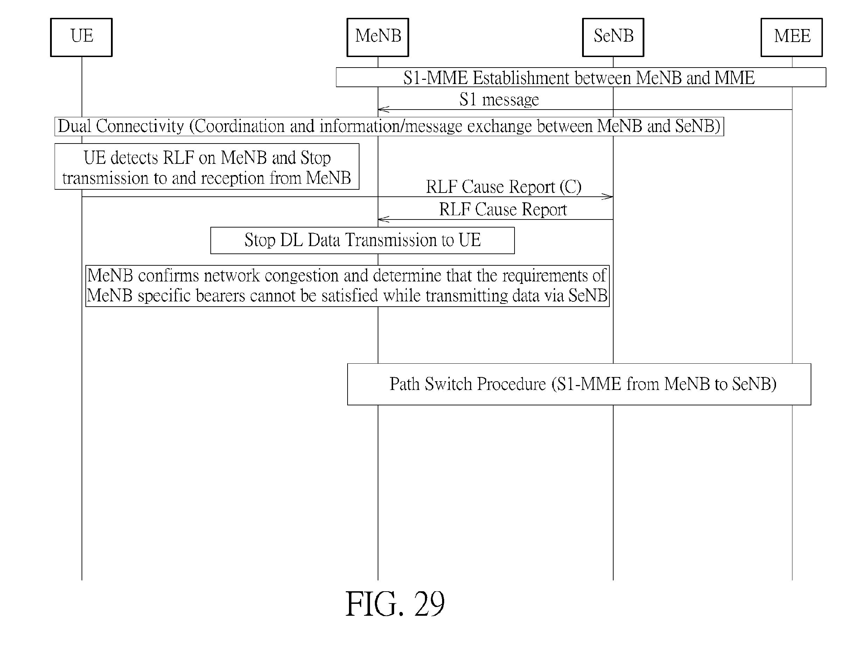

In an embodiment of Fig. 29, if the requirements of MeNB specific bearers cannot be satisfied while transmitting data via the SeNB, the MeNB would then perform the path switch procedure to switch S1-MME from the MeNB to the SeNB (i.e., S1-MME would be between SeNB and UE).

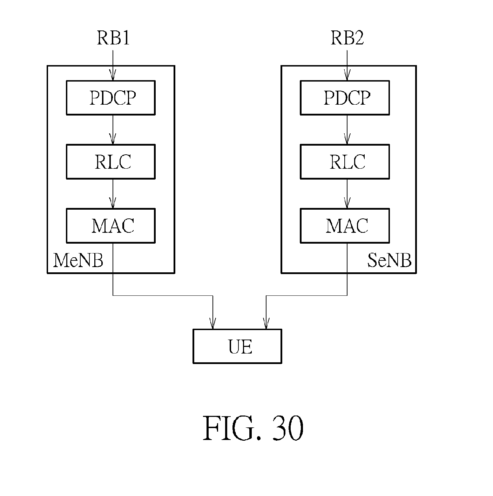

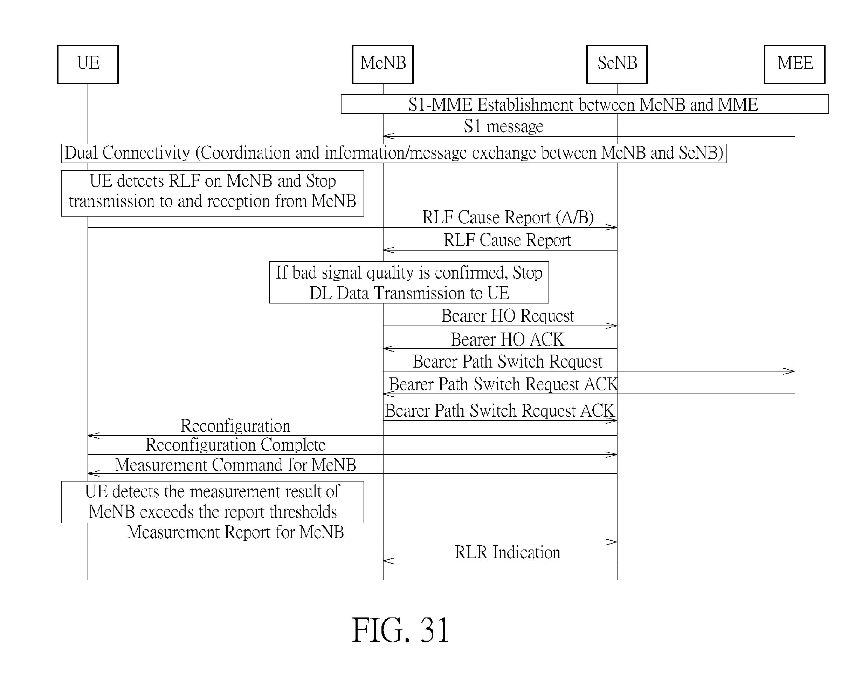

In a third embodiment shown in Fig. 30, the eNBs support only MeNB specific bearer and SeNB specific bearer, and does not support split radio bearer. In addition, the second control plane option is adopted. In detail, Fig. 31 shows that once the UE detects RLF on the MeNB, it may stop transmission to the MeNB and send RLF Cause Report including RLF Cause A or B to the SeNB. Then, the SeNB forward the information of RLF Cause Report to the MeNB. Then, the MeNB would confirm whether the RLF is caused by bad signal quality. If yes, the MeNB sends the bearer handover request Bearer HO Request to the SeNB. If the SeNB returns bearer handover ACK Bearer HO ACK, a path switch procedure (including bearer path switch request from the MeNB to the MME to inform the S-GW to change the bearer path from the MeNB to the SeNB, bearer path switch ACK from the MME to the MeNB, and the MeNB forwards bearer path switch ACK to the SeNB to inform the bearer path switch is complete) is performed to inform S-GW moving the radio bearers from the MeNB to the SeNB. In addition, the SeNB would send the Measurement Command for UE to measure MeNB. In case the UE detects the measurement result of MeNB exceeds the report thresholds, the UE might send the Measurement Report to the SeNB and the SeNB informs the MeNB by the RLR message. After receiving the RLR message from the SeNB, if the MeNB decides to resume DL transmission to UE, the MeNB would send the reconfiguration to UE via the SeNB to recover the radio link.

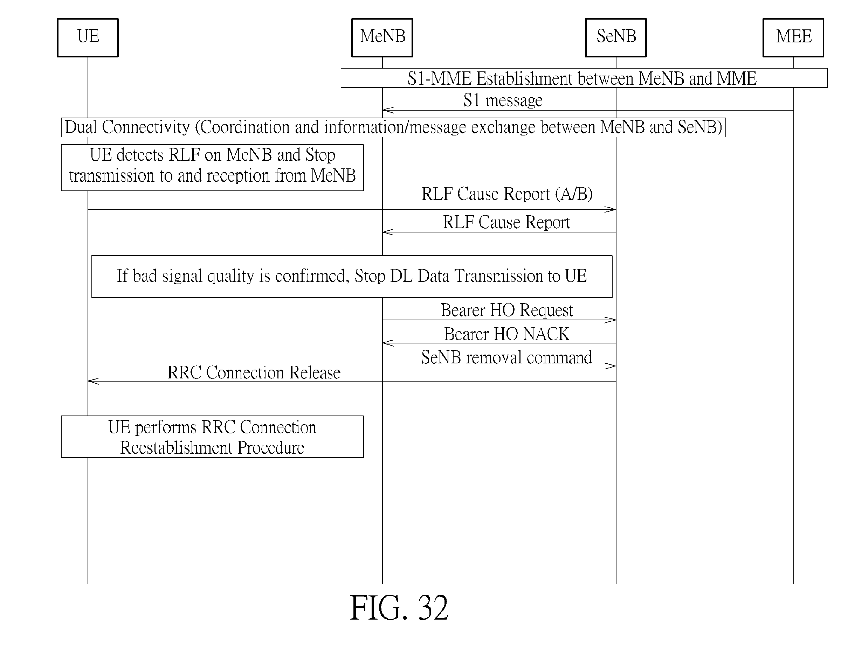

Alternatively, in Fig. 32, if the SeNB returns bearer handover NACK Bearer HO NACL, the MeNB would then send the SeNB Removal Command to the SeNB. After receiving this SeNB Removal Command, the SeNB would send the RRC Connection Release accordingly. If the UE receives the RRC Connection Release from the SeNB while there is still RLF on the MeNB, the UE would perform RRC connection re-establishment procedure.

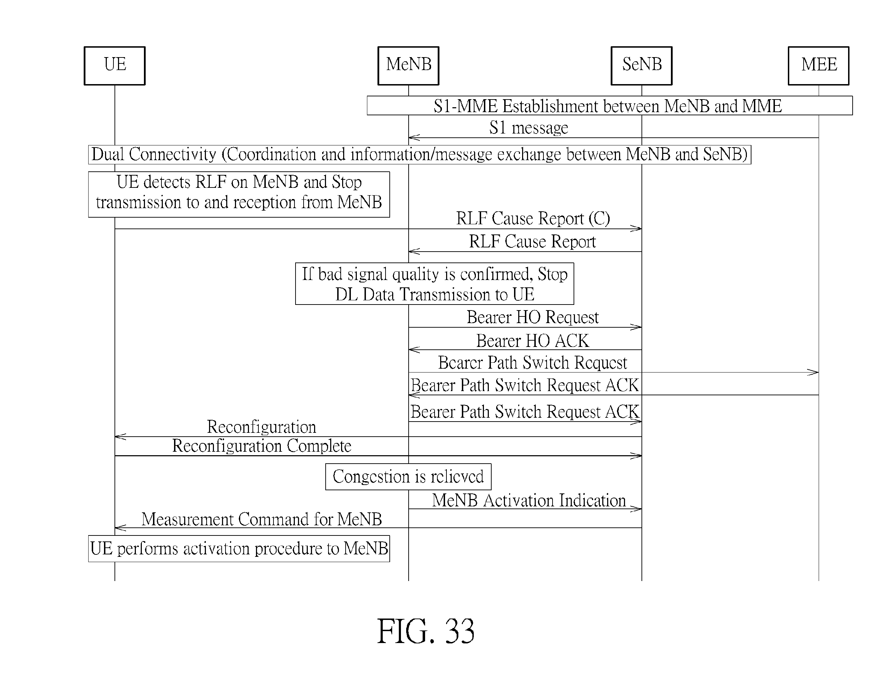

Different to the embodiments of Figs. 31-32, as shown in Fig. 33, the RLF Cause Report includes RLF Cause C. The MeNB would confirm whether the RLF is caused by network congestion. If yes, the MeNB sends the bearer handover request to the SeNB. If the SeNB returns bearer handover ACK Bearer HO ACK, the path switch procedure (including bearer path switch request from the MeNB to the MME to inform the S-GW to change the bearer path from the MeNB to the SeNB, bearer path switch ACK from the MME to the MeNB, and the MeNB forwards bearer path switch ACK to the SeNB to inform the bearer path switch is complete) is performed to inform the S-GW moving the bearers from the MeNB to the SeNB. Also, if the congestion on the MeNB is relieved, the MeNB would send the MeNB Activation Indication and the SeNB would forward this MeNB Activation Indication to the UE. After receiving the MeNB Activation Indication, the UE would perform activation procedure to the MeNB.

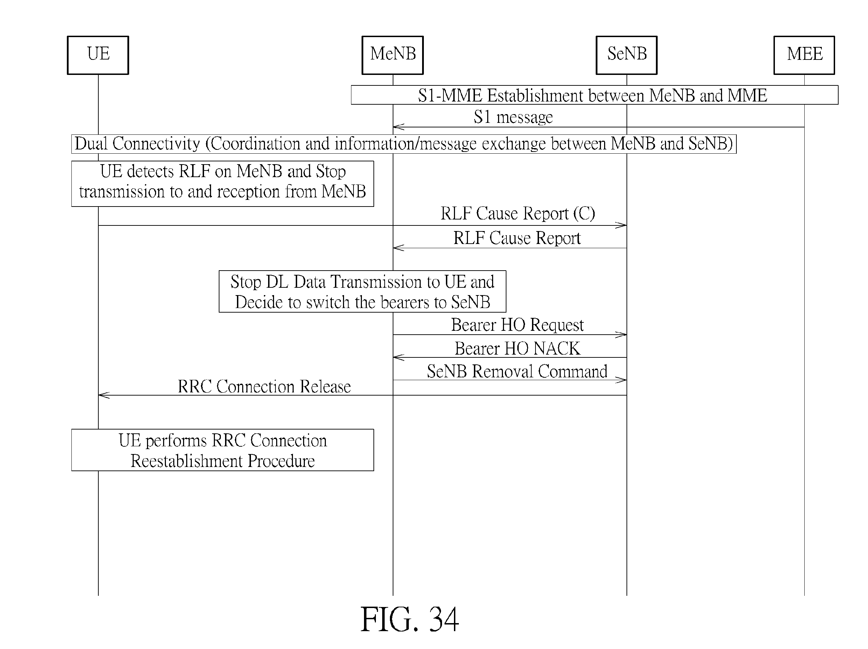

On the other hand, as shown in Fig. 34, if the SeNB returns bearer handover NACK Bearer HO NACK, the MeNB would then send the SeNB Removal Command to the SeNB. After receiving this SeNB Removal Command, the SeNB would send the RRC Connection Release accordingly. If the UE receives the RRC Connection Release from the SeNB while there is still RLF on the MeNB, UE would perform RRC connection re-establishment procedure.

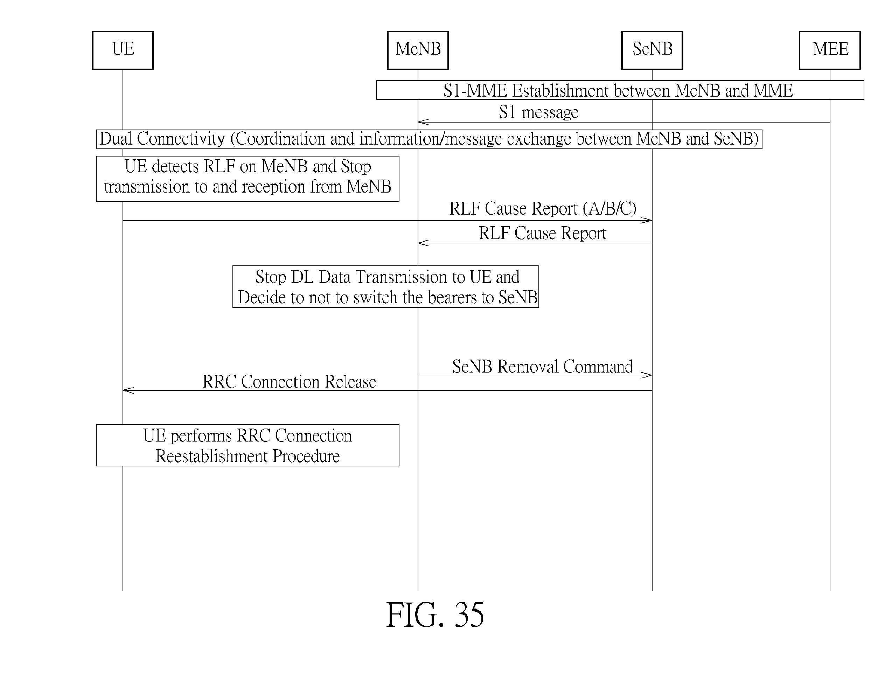

In an embodiment of Fig.35, after receiving the RLF Cause Report, if the MeNB decide to not to switch the bearers to the SeNB, the MeNB would then send the SeNB Removal Command to the SeNB. After receiving the SeNB Removal Command, the SeNB would send the RRC Connection Release accordingly. If the UE receives the RRC Connection Release from the SeNB while there is still RLF on the MeNB, the UE would perform RRC connection re-establishment procedure.

The abovementioned steps of the processes including suggested steps which can be realized by means that could be a hardware, a firmware known as a combination of a hardware device and computer instructions and data that reside as read-only software on the hardware device or an electronic system. Examples of hardware include analog, digital and mixed circuits known as microcircuit, microchip, or silicon chip. Examples of the electronic system include a system on chip (SOC), system in package (SiP), a computer on module (COM) and the communication device 40.

In conclusion, the present invention addresses inconveniences in RLF in dual connectivity systems. The UE should avoid performing unnecessary RRC connection re-establishment procedure if there is still an available radio link between the UE and an eNB involved in the dual connectivity, so as to reduce S1 signaling and service interruption.

## Claims

1. A method of handling radio link failure (RLF) by a communication device in a wireless communication system, **characterized in that** the method comprises the steps of:
connecting to at least two base stations including a first base station and a second base station in the wireless communication system (510);
detecting RLF on the first base station (520); and
sending a RLF cause report associated to the first base station to the second base station (530).

2. The method of claim 1, further comprising the step of:
stopping data transmission to and/or reception from the first base station after sending the RLF cause report; or
stopping signal transmission to the first base station after sending the RLF cause report; or
releasing configurations related to the first base station.

3. The method of claim 1, further comprising the step of:
resuming a radio link with the first base station; or
performing a radio resource control (RRC) connection re-establishment procedure; or
performing deactivation on the first base station if the first base station does not establish interface to a mobility management entity (MME).

4. The method of claim 3, **characterized in that** when the step further comprised is resuming the radio link with the first base station, the method comprises the steps of:
receiving a command or a configuration from the second base station; and
resuming the radio link with the first base station in response to the command or the configuration.

5. The method of claim 3, **characterized in that** when the step further comprised is performing the RRC connection re-establishment procedure, the method comprises the step of:
performing the RRC connection re-establishment procedure when detecting RLF on both of the first base station and the second base station, or when detecting RLF on the first base station which establishes interface to a mobility management entity (MME) and the second base station is deactivated after, or when detecting RLF on the first base station which has no interface to the MME and the second base station that establishes interface to the MME releases a RRC connection of the communication device after, or a timer triggered by RLF ix expired.

6. The method of claim 3, **characterized in that** when the step further comprised is performing deactivation on the first base station if the first base station does not establish interface to the MME, the method comprises the steps of:
receiving a command or a configuration from the second base station; and
performing deactivation on the first base station in response to the command or the configuration.

7. The method of any of claims 1-6, **characterized in that** the RLF cause report includes information that the RLF is caused by physical radio link problem, that RLC retransmission time is over maximum retransmission threshold, or that random access procedure has failed.

8. A method of handling radio link failure (RLF) by a first base station in a wireless communication system, **characterized by** the method comprising the step of:
receiving a RLF cause report associated to a second base station from a communication device of the wireless communication system connected to the first and the second base stations (610).

9. The method of claim 8, further comprising the step of
forwarding the RLF cause report to the second base station.

10. The method of claim 8 or 9, further comprising the step of:
stopping forward data to the communication device via the second base station if the first base station establishes interface to a mobility management entity (MME) of the wireless communication system and the second base station does not establishes interface to the MME; or
forwarding data via another base station if the first base station establishes interface to a mobility management entity (MME) of the wireless communication system and the second base station does not establishes interface to the MME.

11. The method of any of claims 8-10, further comprising the step of
configuring the communication device to resume a radio link between the second base station and the communication device.

12. The method of any of claims 8-10, further comprising the step of:
configuring the communication device to perform a radio resource control (RRC) connection re-establishment procedure;
or deactivating the second base station if the first base station establishes interface to a mobility management entity (MME) of the wireless communication system; or
switching S1-U interface for moving radio bearers from the second base station to the first base station if the first base station establishes interface to the MME.

13. A method of handling radio link failure (RLF) by a first base station in a wireless communication system, **characterized by** the method comprising the step of:
receiving a RLF cause report associated to the first base station from a second base station, wherein the first and the second base stations are connected to the same communication device of the wireless communication system (710).

14. The method of claim 13, further comprising the step of;
transmitting data to the communication device via the second base station if the first base station establishes interface to a mobility management entity (MME) of the wireless communication system; or
stopping data transmission to the communication device.

15. The method of claim 13 or 14, further comprising the step of;
configuring the communication device to resume a radio link between the communication device and the first base station.

16. The method of any of claims 13-15, further comprising the step of:
switching S1-U interface for moving radio bearers from the first base station to the second base station; or
switching S1-MME interface from the first base station to the second base station; or
configuring the communication device to perform a radio resource control (RRC) connection re-establishment procedure.
